# EUROPEAN PATENT APPLICATION

(11) **EP 1 820 715 A1**
(43) Date of publication of application: **22.08.2007**
(21) Application number: 07102635.5
(22) Date of filing: 19.02.2007
(51) Int. Cl.: B62D 7/15

(54) **Multi-axle vehicle**

(30) Priority: 21.02.2006 JP 2006044223
(71) Applicant: Kobelco Cranes Co., Ltd., Shinagawa-ku, Tokyo Tokyo 141-8626 (JP)
(72) Inventor: Kobayashi, Takahiro, Akashi-shi Hyogo 674-0063 (JP)
(74) Representative: TBK-Patent

(57) **Abstract**

A multi-axle vehicle like a crane with at least three axles, each one having left/right wheels actuated respectively by a left/right cylinder (2a/2b,4a/4b, and 3a/3b) and linked via a trapezoidal link. The vehicle includes a steering controller (1) switching the steering of the front, central, and rear steering axles in any of a front axle only, a crab and a cramp steering mode, normal and reverse, and optionally a front axle excluded steering mode. The steering controller (1) includes a front hydraulic circuit (2), a rear hydraulic circuit (3), and a central hydraulic circuit (4), a three-position front switching valve (2v) between the first and the last two circuit, three-position first and second central switching valves (4vi,4v2) and oil return/supply line (5) for compensating for an excess or deficiency of working fluid between left and right central cylinders (4a,4b) and related problems like cavitation, boost or actuation.

## Description

### BACKGROUND OF THE INVENTION

### 1. Field of the Invention

The present invention relates to a multi-axle vehicle in which a traveling structure has at least three steering axles.

### 2. Description of the Related Art

Many multi-axle vehicles, such as wheel cranes, include a steering device with special steering modes. For example, a typical steering device for a multi-axle vehicle provides selectable steering modes for facilitating access to small spaces. The selectable steering modes include a crab steering mode in which front wheels and rear wheels are steered in the same phase, a clamp steering mode in which front wheels and rear wheels are steered in opposite directions, and a normal steering mode. Also, this steering device is configured to perform reverse steering for the vehicle to escape from the worksite.

For example, Japanese Examined Utility Model Registration Application Publication No. 5-35035 discloses a technique which involves steering of a front axle and a rear axle. This means that there is no difference in steering angle between front and rear wheels, either in clamp steering or in crab steering. However, for clamp steering of a multi-axle vehicle, the steering angle of wheels has to be changed according to the mounting position, in a direction from the front to the rear of the vehicle. On the other hand, for crab steering of the multi-axle vehicle, the steering angles of all wheels have to be the same. In other words, for switching from clamp steering to crab steering or from crab steering to clamp steering, the steering angle of wheels on at least one axle (i.e., one axle for a three-axle vehicle, two axles for a four-axle vehicle) needs to be changed. Therefore, the technique disclosed in the above-described document is not applicable to multi-axle vehicles.

A technique disclosed in Japanese Unexamined Patent Application Publication No. 6-32244 aims at steering rear wheels with a front-wheel steering handle when steering is performed in a state where a swivel is turned 180 degrees. Since the rear wheels are independent steering wheels in this case, it is difficult to perform either clamp steering or crab steering. For a multi-axle vehicle, steering is made more difficult and thus, it is virtually impossible to apply this technique to multi-axle vehicles.

A technique disclosed in Japanese Unexamined Patent Application Publication No. 2002-160661 aims at providing a steering device to be mounted on a multi-axle vehicle body and capable of steering central wheels at a steering angle according to the mounting position of the central wheels.

In a steering axle embodying this technique, left and right wheels are engaged with each other via a trapezoidal link. The trapezoidal link includes arms which pivot in response to the steering of the wheels, and a tie rod which connects base ends of the arms and has a length smaller than the distance between the base ends of the arms. If left and right steering cylinders have exactly the same dimensions and the strokes of their rods are equal, the total amount of working fluid corresponding to the rod strokes of the left steering cylinders is equal to that corresponding to the rod strokes of the right steering cylinders.

However, since the left and right wheels are engaged with each other via the trapezoidal link, the speeds of extension/retraction of the left and right steering cylinders at each steering angle position may differ from each other. Since circuits corresponding to the left and right steering cylinders are connected completely in series in this technique, the left and right steering cylinders attempt to extend and retract at the same speed for hydraulic control. However, the speeds of extension/retraction of the left and right steering cylinders may differ from each other due to the mechanical structure described above. Therefore, this may cause cavitation, boost pressure, actuation problems, and the like to occur in the left and right steering cylinders. Besides, there may be cases where central wheels require more than one steering angle modes between front and rear wheels. In this technique, a circuit for steering central wheels on a central steering axle includes a two-position switching valve and thus, the central wheels have only one steering angle mode. Therefore, this technique is not applicable to cases where a plurality of steering angle modes are required.

### SUMMARY OF THE INVENTION

Accordingly, an object of the present invention is to provide a multi-axle vehicle that can prevent cavitation, boost pressure, actuation problems, and the like from occurring in steering cylinders in the process of switching to a normal steering mode, to a crab steering mode, and to a clamp steering mode, and is capable of switching central wheels on a central steering axle to an optimal normal steering mode.

A multi-axle vehicle of the present invention has a basic configuration as follows.

According to an aspect of the present invention, a multi-axle vehicle includes a front steering axle, two or more backside steering axles disposed at the rear of the front steering axle, a trapezoidal link for steering wheels on each of the steering axles in synchronization with each other, left and right hydraulic cylinders for steering wheels on each of the steering axles, and a steering controller for supplying working fluid from a pressure-oil switching unit to the left and right hydraulic cylinders. The steering controller includes a front hydraulic circuit, and a rear hydraulic circuit and a central hydraulic circuit that serially communicate with the front hydraulic circuit via a front switching valve. The front hydraulic circuit includes a first front line extending from one port of the pressure-oil switching unit and communicating with left and right front cylinders of the left and right hydraulic cylinders, a second front line extending from the left and right front cylinders and communicating with the front switching valve having three positions, and a third front line extending from the front switching valve and communicating with the other port of the pressure-oil switching unit. The central hydraulic circuit includes a first central switching valve having three selectable positions including a first position for allowing a second rear line extending from left and right rear cylinders of the rear hydraulic circuit to communicate with both left and right central cylinders, a second position for allowing the second rear line to communicate with the right central cylinder, and a third position for allowing the second rear line to communicate with the left central cylinder; a second central switching valve having three selectable positions including a first position for allowing a first central line extending from the front switching valve to communicate with both the left and right central cylinders, a second position for allowing the first central line to communicate with the right central cylinder, and a third position for allowing the first central line to communicate with the left central cylinder; a second central line for allowing one of the left and right central cylinders to communicate, via the first central switching valve and the second central switching valve, with the other of the left and right central cylinders; and an oil return/supply line extending separately from the second central line, communicating with a tank, and provided for compensating for an excess or deficiency of working fluid.

In the multi-axle vehicle of the present invention, when the second front line and the third front line communicate with each other via the front switching valve, the same amount of pressure oil flows from the pressure-oil switching unit, via the first, second, and third front lines of the front hydraulic circuit, into or flows out of head-side and rod-side oil chambers of the left and right front cylinders, according to the amount of operation of a handle. Therefore, left and right wheels on the front steering axle are steered in a normal steering mode. Then, since switching the front switching valve allows the front hydraulic circuit, the rear hydraulic circuit, and the central hydraulic circuit to serially communicate each other, switching the pressure-oil switching unit to one position allows working fluid to flow from the front switching valve to the rear hydraulic circuit, and further from the rear hydraulic circuit to the central hydraulic circuit. Also, switching the pressure-oil switching unit to the other position allows working fluid to flow from the front switching valve to the central hydraulic circuit, and further from the central hydraulic circuit to the rear hydraulic circuit.

Thus, according to the present invention, by appropriately switching the first central switching valve and the second central switching valve, the multi-axle vehicle can be switched to a first mode where the hydraulic pressure of working fluid is applied to both the head-side and rod-side oil chambers of the left and right central cylinders, a second mode where the hydraulic pressure of working fluid is applied only to the head-side oil chambers of the left and right central cylinders, and a third mode where the hydraulic pressure of working fluid is applied only to the rod-side oil chambers of the left and right central cylinders. Moreover, since the left and right central cylinders can be controlled independently, problems resulting from a difference in rod extension/retraction speed between the left and right central cylinders can be prevented. Even if there is an excess or deficiency in the amount of working fluid flowing into or out of the head-side or rod-side oil chamber, excessive working fluid is returned through the oil return/supply line to the tank, while a deficiency in working fluid is compensated by supply from the tank through the oil return/supply line. Therefore, it is possible to prevent cavitation, boost pressure, actuation problems, and the like from occurring in the central cylinders.

According to another aspect of the present invention, it is preferable that a three-port two-position second front switching valve be disposed between the front switching valve and the front cylinders on the second front line. The second front switching valve is configured to make a selection to allow a branch line branched from the first front line to communicate with the front switching valve and interrupt communication between the second front line and the front switching valve, or cancel the selection to interrupt the communication between the branch line and the front switching valve and allow the second front line to communicate with the front switching valve.

In this case, switching the three-port two-position second front switching valve allows the front hydraulic circuit to be closed, and thereby allows steering of the left and right wheels on the front steering axle to be locked. At the same time, extension and retraction of rods of the left and right cylinders of the central and rear hydraulic circuits can be controlled and thus, wheels on the central and rear steering axles only can be steered. Since this allows rear steering wheels to be independently controlled, an excellent effect of enhancing the capability of accessing small spaces can be achieved.

### BRIEF DESCRIPTION OF THE DRAWINGS

Fig. 1 is a diagram of a steering control means for illustrating a normal steering mode of a multi-axle vehicle according to a first embodiment of the present invention.
Fig. 2 is a schematic diagram illustrating a trapezoidal link of the multi-axle vehicle.
Fig. 3 illustrates the normal steering mode of the multi-axle vehicle according to the first embodiment.
Fig. 4 illustrates a crab steering mode of the multi-axle vehicle according to the first embodiment.
Fig. 5 illustrates a clamp steering mode of the multi-axle vehicle according to the first embodiment.
Fig. 6 is a diagram of the steering control means for illustrating the crab steering mode of the multi-axle vehicle according to the first embodiment.
Fig. 7 is a diagram of the steering control means for illustrating the clamp steering mode of the multi-axle vehicle according to the first embodiment.
Fig. 8 is a diagram illustrating part of a steering control means of a multi-axle vehicle according to a second embodiment of the present invention.
Fig. 9 illustrates a special steering mode for steering wheels only on backside steering axles of the multi-axle vehicle according to the second embodiment.
Fig. 10 is a diagram of the steering control means for illustrating the special steering mode of the multi-axle vehicle according to the second embodiment.

### DESCRIPTION OF THE PREFERRED EMBODIMENTS

A multi-axle vehicle according to a first embodiment of the present invention will now be described with reference to the drawings. A multi-axle vehicle with three axles will be described for illustrative purposes.

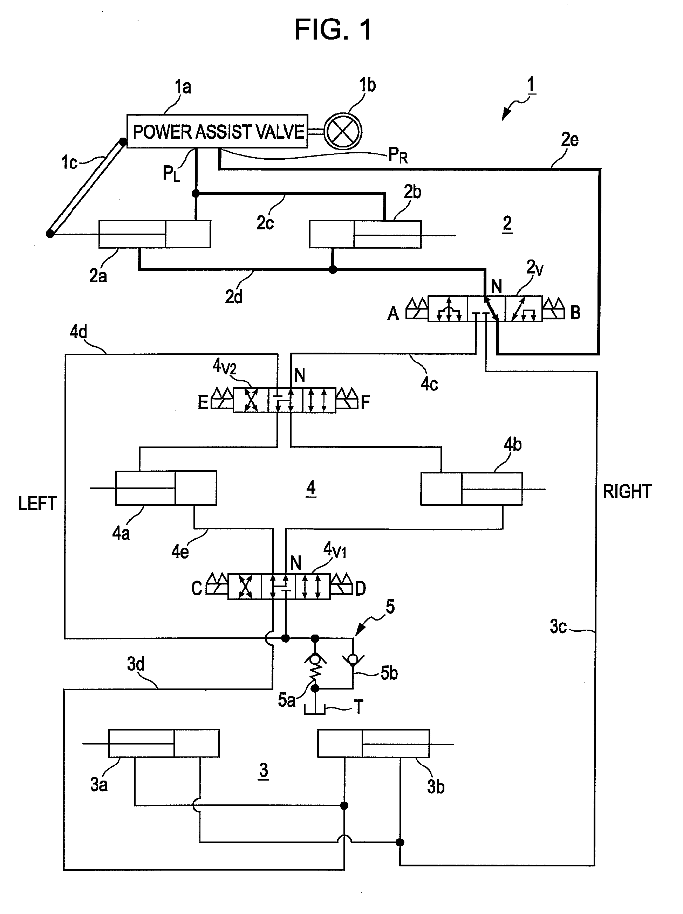

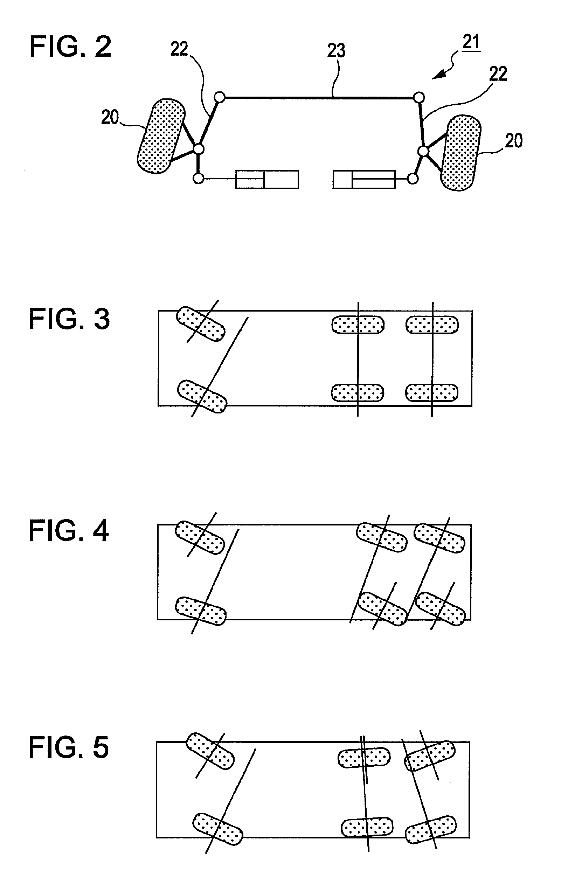

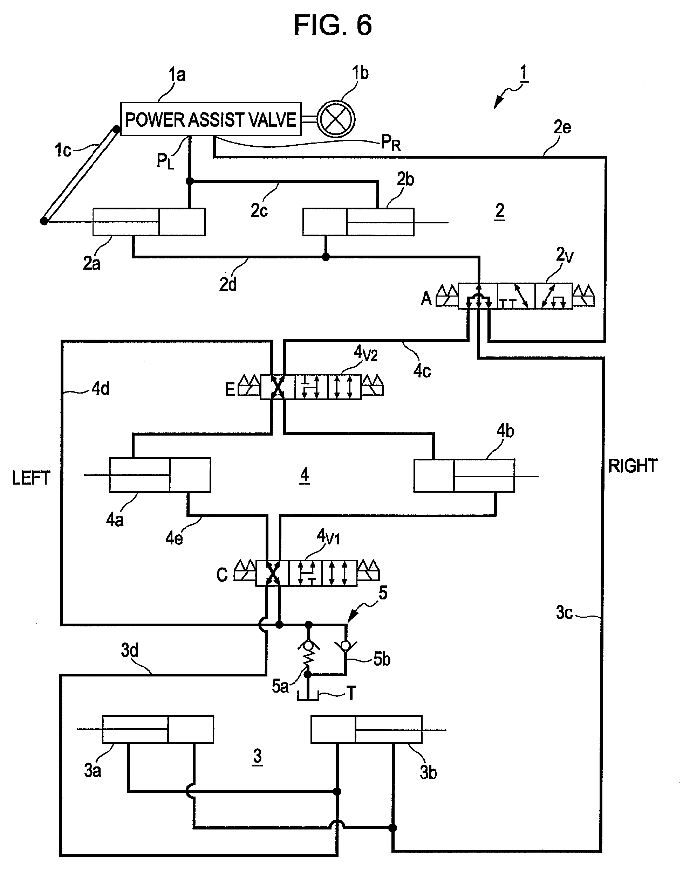

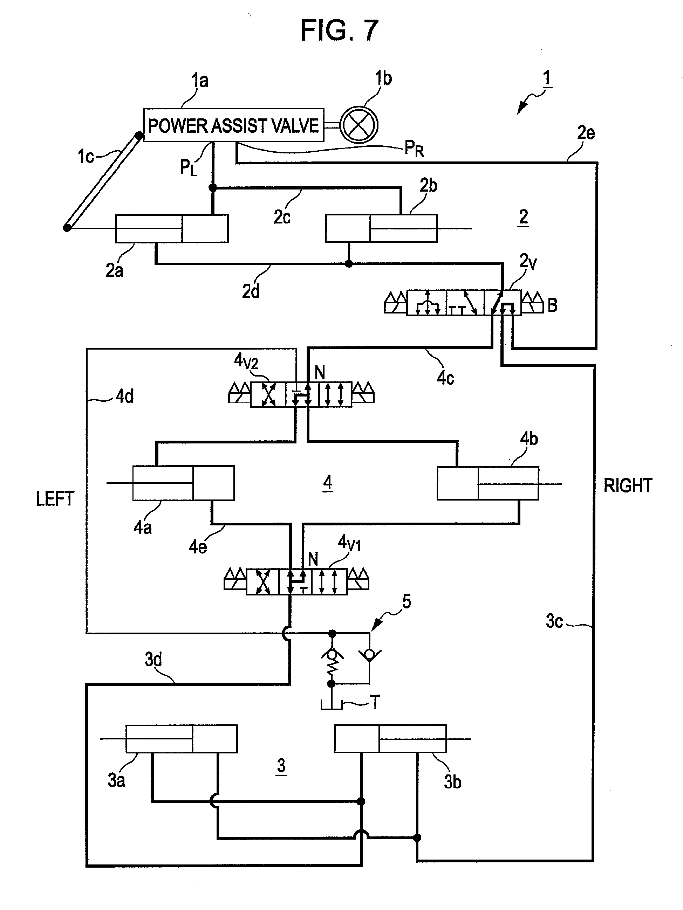

Fig. 1 is a diagram of a steering control means for illustrating a normal steering mode of the multi-axle vehicle. Fig. 2 is a schematic diagram illustrating a trapezoidal link of the multi-axle vehicle. Fig. 3 illustrates the normal steering mode of the multi-axle vehicle. Fig. 4 illustrates a crab steering mode of the multi-axle vehicle. Fig. 5 illustrates a clamp steering mode of the multi-axle vehicle. Fig. 6 is a diagram of the steering control means for illustrating the crab steering mode of the multi-axle vehicle. Fig. 7 is a diagram of the steering control means for illustrating the clamp steering mode of the multi-axle vehicle.

The multi-axle vehicle of the first embodiment will be described with reference to Fig. 1. A steering control means 1 of the multi-axle vehicle includes a front hydraulic circuit 2 for steering left and right wheels on a front steering axle (not shown) provided with a trapezoidal link 21 described below. The steering control means 1 also includes a rear hydraulic circuit 3 for steering left and right wheels on a rear steering axle (not shown) at the rearmost of backside steering axles. The steering control means 1 further includes a central hydraulic circuit 4 for steering left and right wheels on a central steering axle (not shown) located between the rear steering axle and the front steering axle.

In the present invention, left and right hand sides with respect to the traveling direction of the multi-axle vehicle, as viewed from an operator who steers the vehicle, are referred to as "left" and "right", respectively.

As illustrated in Fig. 2, the trapezoidal link 21 includes arms 22 and 22 which pivot in response to the steering of left and right wheels 20 on each steering axle, and a tie rod 23 which connects base ends of the arms 22 and 22 and has a length smaller than the distance between the base ends of the arms 22 and 22. Therefore, the trapezoidal link 21 is bendable at joint portions. The left and right wheels 20 are steered in synchronization with each other via the trapezoidal link 21. The reason for this is that since the turning radii of the left and right wheels 20 are different during steering, it is necessary to vary the steering angle of the left and right wheels 20.

Referring back to Fig. 1, the front hydraulic circuit 2 of the steering control means 1 includes a first front line 2c extending from an L port P_{L} of a pressure-oil switching means (power assist valve) 1a and communicating with an oil chamber on the head side (hereinafter referred to as "head-side oil chamber") of a left front cylinder 2a and an oil chamber on the rod side (hereinafter referred to as "rod-side oil chamber") of a right front cylinder 2b. The L port P_{L} is one of two ports of the pressure-oil switching means 1a for changing the discharge rate and discharge direction of working fluid in response to clockwise or counterclockwise rotation of a handle 1b. The left front cylinder 2a and the right front cylinder 2b are provided for steering the wheels on the front steering axle. The front hydraulic circuit 2 further includes a second front line 2d extending from a rod-side oil chamber of the left front cylinder 2a and a head-side oil chamber of the right front cylinder 2b, and communicating with a three-position front switching valve 2_{V} described below. The front hydraulic circuit 2 further includes a third front line 2e extending from the front switching valve 2_{V} and communicating with an R port P_{R}, which is the other of the two ports of the pressure-oil switching means 1a. Additionally, a mechanical link 1c is connected to the pressure-oil switching means 1a at one end, and to the rod end of the left front cylinder 2a at the other end. The mechanical link 1c controls the amount of flow from the pressure-oil switching means 1a into the left front cylinder 2a and the right front cylinder 2b, according to the amount of extension or retraction of the rod of the left front cylinder 2a, and thereby performs a feedback function.

The rear hydraulic circuit 3 of the steering control means 1 includes a first rear line 3c extending from the front switching valve 2_{V} and communicating with a head-side oil chamber of a left rear cylinder 3a and a rod-side oil chamber of a right rear cylinder 3b for steering the wheels on the rear steering axle via the front switching valve 2_{V}.

The rear hydraulic circuit 3 further includes a second rear line 3d extending from a rod-side oil chamber of the left rear cylinder 3a and a head-side oil chamber of the right rear cylinder 3b and communicating with the central hydraulic circuit 4 for steering the wheels on the central steering axle.

The central hydraulic circuit 4 of the steering control means 1 includes a first central line 4c extending from the front switching valve 2_{V}, passing through a three-position second central switching valve 4_{V2} described below, and communicating with a rod-side oil chamber of a left central cylinder 4a and a head-side oil chamber of a right central cylinder 4b for steering the wheels on the central steering axle via the second central switching valve 4_{V2} and the front switching valve 2_{V}. The central hydraulic circuit 4 further includes a second central line 4d extending from a rod-side oil chamber of the right central cylinder 4b, passing through a three-position first central switching valve 4_{V1} described below, and communicating with the second central switching valve 4_{V2}. The central hydraulic circuit 4 further includes a third central line 4e extending from a head-side oil chamber of the left central cylinder 4a, passing through the first central switching valve 4_{V1}, and communicating with the second rear line 3d of the rear hydraulic circuit 3.

The central hydraulic circuit 4 also includes an oil return/supply line 5 for returning part of working fluid discharged from the rod-side and head-side oil chambers of the left central cylinder 4a and the right central cylinder 4b, via the second central switching valve 4_{V2} and the first central switching valve 4_{V1}, to a tank T, while supplying working fluid from the tank T to the rod-side and head-side oil chambers of the left central cylinder 4a and the right central cylinder 4b. The oil return/supply line 5 includes an oil return line 5a and an oil supply line 5b. The oil return line 5a extends from the second central line 4d and communicates with the tank T. The oil return line 5a is provided with a check valve disposed in an orientation that allows pressure oil having more than a predetermined pressure to flow back to the tank T. The oil supply line 5b is provided with a check valve disposed in an orientation that allows working fluid to flow from the tank T to the second central line 4d. The oil supply line 5b separates at the upstream end of the check valve of the oil return line 5a and joins the oil return line 5a at the downstream end.

In this case, working fluid from a rod-side oil chamber of one central cylinder toward the oil return/supply line 5 flows into a head-side oil chamber of the other central cylinder, while a deficiency in working fluid is compensated by supply from the oil supply line 5b to the head-side oil chamber of the other central cylinder. On the other hand, working fluid from a head-side oil chamber of one central cylinder toward the oil return/supply line 5 flows into a rod-side oil chamber of the other central cylinder, while excessive working fluid is returned from the oil return line 5a to the tank T. In other words, working fluid corresponding to a difference in capacity between head-side and rod-side oil chambers of a central cylinder, resulting from the presence or absence of a piston rod, is returned to the tank T, while a deficiency in working fluid is compensated by supply from the tank T. Therefore, it is possible to prevent cavitation, boost pressure, actuation problems, and the like from occurring in the left central cylinder 4a and the right central cylinder 4b.

The front switching valve 2_{V} has a position N which allows the second front line 2d and the third front line 2e of the front hydraulic circuit 2 to communicate with each other and, at the same time, interrupts communication between the first rear line 3c of the rear hydraulic circuit 3 and the first central line 4c of the central hydraulic circuit 4. The front switching valve 2_{V} further has a position A which allows the second front line 2d of the front hydraulic circuit 2 and the first rear line 3c of the rear hydraulic circuit 3 to communicate with each other, and also allows the third front line 2e of the front hydraulic circuit 2 and the first central line 4c of the central hydraulic circuit 4 to communicate with each other. The front switching valve 2ᵥ further has a position B which allows the second front line 2d of the front hydraulic circuit 2 and the first central line 4c of the central hydraulic circuit 4 to communicate with each other, and also allows the third front line 2e of the front hydraulic circuit 2 and the first rear line 3c of the rear hydraulic circuit 3 to communicate with each other.

The first central switching valve 4_{V1} has a position N which allows the second rear line 3d extending from the rod-side oil chamber of the left rear cylinder 3a and the head-side oil chamber of the right rear cylinder 3b to communicate with the head-side oil chamber of the left central cylinder 4a and the rod-side oil chamber of the right central cylinder 4b of the central hydraulic circuit 4 and, at the same time, interrupts communication with the oil return/supply line 5. The first central switching valve 4_{V1} further has a position C which allows the second rear line 3d to communicate with the rod-side oil chamber of the right central cylinder 4b, and also allows the head-side oil chamber of the left central cylinder 4a to communicate with the oil return/supply line 5. The first central switching valve 4_{V1} further has a position D which allows the second rear line 3d to communicate with the head-side oil chamber of the left central cylinder 4a, and also allows the rod-side oil chamber of the right central cylinder 4b to communicate with the oil return/supply line 5.

The second central switching valve 4_{V2} has a position N which allows the first central line 4c of the central hydraulic circuit 4 to communicate with the rod-side oil chamber of the left central cylinder 4a and the head-side oil chamber of the right central cylinder 4b and, at the same time, interrupts communication with the second central line 4d which communicates via the first central switching valve 4_{V1} with the head-side oil chamber of the left central cylinder 4a and the rod-side oil chamber of the right central cylinder 4b. The second central switching valve 4_{V2} further has a position E which allows the first central line 4c to communicate with the rod-side oil chamber of the left central cylinder 4a, and also allows the second central line 4d to communicate with the head-side oil chamber of the right central cylinder 4b. The second central switching valve 4_{V2} further has a position F which allows the first central line 4c to communicate with the head-side oil chamber of the right central cylinder 4b, and also allows the second central line 4d to communicate with the rod-side oil chamber of the left central cylinder 4a.

Steering of wheels in the normal steering mode of the multi-axle vehicle according to the first embodiment of the present invention will now be described with reference to Fig. 1 and Fig. 3. As illustrated in Fig. 3, steering of the multi-axle vehicle in the normal steering mode involves left and right steering of wheels on the front steering axle only. In other words, if a steering mode selection switch provided near the driver's seat of the multi-axle vehicle is set to the normal steering mode, the front switching valve 2_{V}, the first central switching valve 4_{V1}, and the second central switching valve 4_{V2} are all held at their respective positions N. Therefore, working fluid flows only in the front hydraulic circuit 2 indicated by thick lines in Fig. 1. By controlling the working fluid flowing in the front hydraulic circuit 2, the left front cylinder 2a and the right front cylinder 2b are controlled. Thus, wheels on the front steering axle only are steered.

Steering of wheels in the crab steering mode of the multi-axle vehicle according to the first embodiment of the present invention will be described with reference to Fig. 4 and Fig. 6. As illustrated in Fig. 4, in steering of the multi-axle vehicle in the crab steering mode, all wheels on the front, central, and rear steering axles are simultaneously steered in the same direction. In this case, if the steering mode selection switch provided near the driver's seat of the multi-axle vehicle is set to the crab steering mode, the front switching valve 2_{V} is switched to the position A, the first central switching valve 4_{V1} is switched to the position C, and the second central switching valve 4_{V2} is switched to the position E. Therefore, all the cylinders are controlled by working fluid flowing through the lines indicated by thick lines in Fig. 6.

Next, the following will describe a case where rods of cylinders on the left-hand side are extended and rods of cylinders on the right-hand side are retracted by discharging working fluid from the L port P_{L} of the pressure-oil switching means 1a and returning working fluid to the R port P_{R}. Specifically, working fluid discharged from the L port P_{L} of the pressure-oil switching means 1a passes through the first front line 2c and flows into the head-side oil chamber of the left front cylinder 2a and the rod-side oil chamber of the right front cylinder 2b. This causes the rod of the left front cylinder 2a to extend and the rod of the right front cylinder 2b to retract. Since it is configured such that wheels are steered in synchronization with each other via the trapezoidal link, the left front cylinder 2a and the right front cylinder 2b are actuated by substantially the same amount. The working fluid from the rod-side oil chamber of the left front cylinder 2a and the head-side oil chamber of the right front cylinder 2b passes through the second front line 2d and the front switching valve 2_{V}, and flows into the first rear line 3c of the rear hydraulic circuit 3.

Then, the working fluid passes through the first rear line 3c and flows into the head-side oil chamber of the left rear cylinder 3a and the rod-side oil chamber of the right rear cylinder 3b. This causes the rod of the left rear cylinder 3a to extend and the rod of the right rear cylinder 3b to retract. Since it is configured such that wheels are steered in synchronization with each other via the trapezoidal link, the left rear cylinder 3a and the right rear cylinder 3b are actuated by substantially the same amount. The working fluid from the rod-side oil chamber of the left rear cylinder 3a and the head-side oil chamber of the right rear cylinder 3b passes through the second rear line 3d and the first central switching valve 4_{V1} of the central hydraulic circuit 4, and flows into the rod-side oil chamber of the right central cylinder 4b. This causes the rod of the right central cylinder 4b to retract.

Then, the working fluid forced out of the head-side oil chamber of the right central cylinder 4b passes through the second central switching valve 4_{V2}, the second central line 4d, and the first central switching valve 4_{V1}, and flows into the head-side oil chamber of the left central cylinder 4a actuated, by the operation of the trapezoidal link, in the direction of extension of the rod thereof. At the same time, working fluid for compensating for a deficiency flows from the tank T, passes through the oil return/supply line 5 and the first central switching valve 4_{V1}, and flows into the head-side oil chamber of the left central cylinder 4a. On the other hand, the working fluid forced out of the rod-side oil chamber of the left central cylinder 4a passes through the second central switching valve 4_{V2}, the first central line 4c, the front switching valve 2_{V}, and the third front line 2e of the front hydraulic circuit 2 and returns to the R port P_{R} of the pressure-oil switching means 1a. Therefore, all wheels on the front, central, and rear steering axles are simultaneously steered in the same direction, for example, to the left.

Next, the following will describe a case where rods of cylinders on the left-hand side are retracted and rods of cylinders on the right-hand side are extended by discharging working fluid from the R port P_{R} of the pressure-oil switching means 1a and returning working fluid to the L port P_{L}. Specifically, working fluid discharged from the R port P_{R} of the pressure-oil switching means 1a passes through the third front line 2e, the front switching valve 2_{V}, the first central line 4c of the central hydraulic circuit 4, and the second central switching valve 4_{V2}, and flows into the rod-side oil chamber of the left central cylinder 4a. This causes the rod of the left central cylinder 4a to retract. Then, the working fluid forced out of the head-side oil chamber of the left central cylinder 4a passes through the third central line 4e, the first central switching valve 4_{V1}, the second central line 4d, and the second central switching valve 4_{V2}, and flows into the head-side oil chamber of the right central cylinder 4b actuated, by the operation of the trapezoidal link, in the direction of extension of the rod thereof. At the same time, in the case of a deficiency in working fluid, a corresponding amount of working fluid is supplied from the tank T, passes through the oil return/supply line 5, the second central line 4d, and the second central switching valve 4_{V2}, and flows into the head-side oil chamber of the right central cylinder 4b.

Then, the working fluid forced out of the rod-side oil chamber of the right central cylinder 4b passes through the first central switching valve 4_{V1} and the second rear line 3d of the rear hydraulic circuit 3, and flows into the rod-side oil chamber of the left rear cylinder 3a and the head-side oil chamber of the right rear cylinder 3b. This causes the rod of the left rear cylinder 3a to retract and the rod of the right rear cylinder 3b to extend. The working fluid forced out of the head-side oil chamber of the left rear cylinder 3a and the rod-side oil chamber of the right rear cylinder 3b passes through the first rear line 3c and the front switching valve 2_{V}, and flows into the second front line 2d of the front hydraulic circuit 2.

Then, the working fluid passes through the second front line 2d and flows into the rod-side oil chamber of the left front cylinder 2a and the head-side oil chamber of the right front cylinder 2b. This causes the rod of the left front cylinder 2a to retract and the rod of the right front cylinder 2b to extend. Then, the working fluid forced out of the head-side oil chamber of the left front cylinder 2a and the rod-side oil chamber of the right front cylinder 2b passes through the first front line 2c and returns to the L port P_{L} of the pressure-oil switching means 1a. Therefore, all wheels on the front, central, and rear steering axles are simultaneously steered in the same direction, for example, to the right.

Steering of wheels in the clamp steering mode of the multi-axle vehicle according to the first embodiment of the present invention will be described with reference to Fig. 5 and Fig. 7.

As illustrated in Fig. 5, in steering of the multi-axle vehicle in the clamp steering mode, wheels on the front steering axle are steered in a direction opposite to that in which wheels on the central and rear steering axles are steered (in such a way that the steering angle of the wheels on the central steering axle is smaller than that of the wheels on the rear steering axle). In this case, if the steering mode selection switch provided near the driver's seat of the multi-axle vehicle is set to the clamp steering mode, the front switching valve 2_{V} is switched to the position B, while the first central switching valve 4_{V1} and the second central switching valve 4_{V2} are held at their respective positions N. Therefore, all the cylinders are controlled, as described below, by working fluid flowing through the lines indicated by thick lines in Fig. 7.

First, the following will describe a case where, by discharging working fluid from the L port P_{L} of the pressure-oil switching means 1a and returning the working fluid to the R port P_{R}, the rod of the left front cylinder 2a of the front hydraulic circuit 2 is extended, the rod of the right front cylinder 2b is retracted, the rod of the left central cylinder 4a and the rod of the left rear cylinder 3a are retracted, and the rod of the right central cylinder 4b and the rod of the right rear cylinder 3b are extended.

In this case, working fluid passes through the first front line 2c of the front hydraulic circuit 2 and flows into the head-side oil chamber of the left front cylinder 2a and the rod-side oil chamber of the right front cylinder 2b. This causes the rod of the left front cylinder 2a to extend and the rod of the right front cylinder 2b to retract. The working fluid forced out of the rod-side oil chamber of the left front cylinder 2a and the head-side oil chamber of the right front cylinder 2b passes through the second front line 2d and the front switching valve 2_{V}, and flows into the first central line 4c of the central hydraulic circuit 4. Then, the working fluid from the first central line 4c passes through the second central switching valve 4_{V2} and flows into the rod-side oil chamber of the left central cylinder 4a and the head-side oil chamber of the right central cylinder 4b. This causes the rod of the left central cylinder 4a to retract and the rod of the right central cylinder 4b to extend.

The working fluid forced out of the head-side oil chamber of the left central cylinder 4a and the rod-side oil chamber of the right central cylinder 4b passes through the first central switching valve 4_{V1} and the second rear line 3d of the rear hydraulic circuit 3, and flows into the rod-side oil chamber of the left rear cylinder 3a and the head-side oil chamber of the right rear cylinder 3b. This causes the rod of the left rear cylinder 3a to retract and the rod of the right rear cylinder 3b to extend. The inside diameter of the left and right rear cylinders 3a and 3b is set to be smaller than that of the left and right central cylinders 4a and 4b. The amount of rightward actuation of the left and right rear cylinders 3a and 3b is greater than that of the left and right central cylinders 4a and 4b. Therefore, the steering angle of wheels corresponding to the left and right rear cylinders 3a and 3b is greater than that corresponding to the left and right central cylinders 4a and 4b. The working fluid forced out of the head-side oil chamber of the left rear cylinder 3a and the rod-side oil chamber of the right rear cylinder 3b passes through the first rear line 3c, the front switching valve 2ᵥ, and the third front line 2e of the front hydraulic circuit 2 and flows into the R port P_{R} of the pressure-oil switching means 1a. Thus, for example, the wheels on the front steering axle are steered to the left, while the wheels on the central and rear steering axles are steered to the right.

Next, the following will describe a case where, by discharging working fluid from the R port P_{R} of the pressure-oil switching means 1a and returning the working fluid to the L port P_{L}, the rod of the left front cylinder 2a of the front hydraulic circuit 2 is retracted, the rod of the right front cylinder 2b is extended, the rod of the left central cylinder 4a and the rod of the left rear cylinder 3a are extended, and the rod of the right central cylinder 4b and the rod of the right rear cylinder 3b are retracted. In this case, working fluid discharged from the R port P_{R} of the pressure-oil switching means 1a passes through the third front line 2e of the front hydraulic circuit 2, the front switching valve 2_{V}, and the first rear line 3c of the rear hydraulic circuit 3, and flows into the head-side oil chamber of the left rear cylinder 3a and the rod-side oil chamber of the right rear cylinder 3b. This causes the rod of the left rear cylinder 3a to extend and the rod of the right rear cylinder 3b to retract.

The working fluid forced out of the rod-side oil chamber of the left rear cylinder 3a and the head-side oil chamber of the right rear cylinder 3b passes through the second rear line 3d of the rear hydraulic circuit 3 and the first central switching valve 4_{V1} of the central hydraulic circuit 4, and flows into the head-side oil chamber of the left central cylinder 4a and the rod-side oil chamber of the right central cylinder 4b. This causes the rod of the left central cylinder 4a to extend and the rod of the right central cylinder 4b to retract. As described above, the inside diameter of the left and right central cylinders 4a and 4b is set to be greater than that of the left and right rear cylinders 3a and 3b. The amount of rightward actuation of the left and right central cylinders 4a and 4b is smaller than that of the left and right rear cylinders 3a and 3b. Therefore, the steering angle of wheels corresponding to the left and right central cylinders 4a and 4b is smaller than that corresponding to the left and right rear cylinders 3a and 3b.

The working fluid forced out of the rod-side oil chamber of the left central cylinder 4a and the head-side oil chamber of the right central cylinder 4b passes through the second central switching valve 4_{V2}, the first central line 4c, the front switching valve 2_{V} of the front hydraulic circuit 2, and the second front line 2d, and flows into the rod-side oil chamber of the left front cylinder 2a and the head-side oil chamber of the right front cylinder 2b. This causes the rod of the left front cylinder 2a to retract and the rod of the right front cylinder 2b to extend. Then, the working fluid forced out of the head-side oil chamber of the left front cylinder 2a and the rod-side oil chamber of the right front cylinder 2b passes through the first front line 2c and flows into the L port P_{L} of the pressure-oil switching means 1a. Thus, for example, the wheels on the front steering axle are steered to the right, while the wheels on the central and rear steering axles are steered to the left.

In the multi-axle vehicle according to the first embodiment of the present invention, steering in the normal steering mode, crab steering mode, and clamp steering mode is performed in the way as described above. In other words, by appropriately switching the three-position first central switching valve 4_{V1} and the three-position second central switching valve 4_{V2}, the multi-axle vehicle can be switched to a first mode, a second mode, and a third mode. That is, the hydraulic pressure of working fluid having passed through the front switching valve 2_{V} is applied to both the head-side and rod-side oil chambers of the left and right central cylinders 4a and 4b in the first mode, applied only to the head-side oil chambers of the left and right central cylinders 4a and 4b in the second mode, and applied only to the rod-side oil chambers of the left and right central cylinders 4a and 4b in the third mode.

Additionally, in the multi-axle vehicle according to the first embodiment of the present invention, the left and right central cylinders 4a and 4b can be controlled independently. This prevents problems resulting from a difference in rod extension/retraction speed between the left and right central cylinders 4a and 4b. Even if there is an excess or deficiency in the amount of working fluid flowing into or out of the head-side or rod-side oil chamber, excessive working fluid is returned through the oil return/supply line 5 to the tank T, while a deficiency in working fluid is compensated by supply from the tank T. Therefore, it is possible to prevent cavitation, boost pressure, actuation problems, and the like from occurring in the left and right central cylinders 4a and 4b.

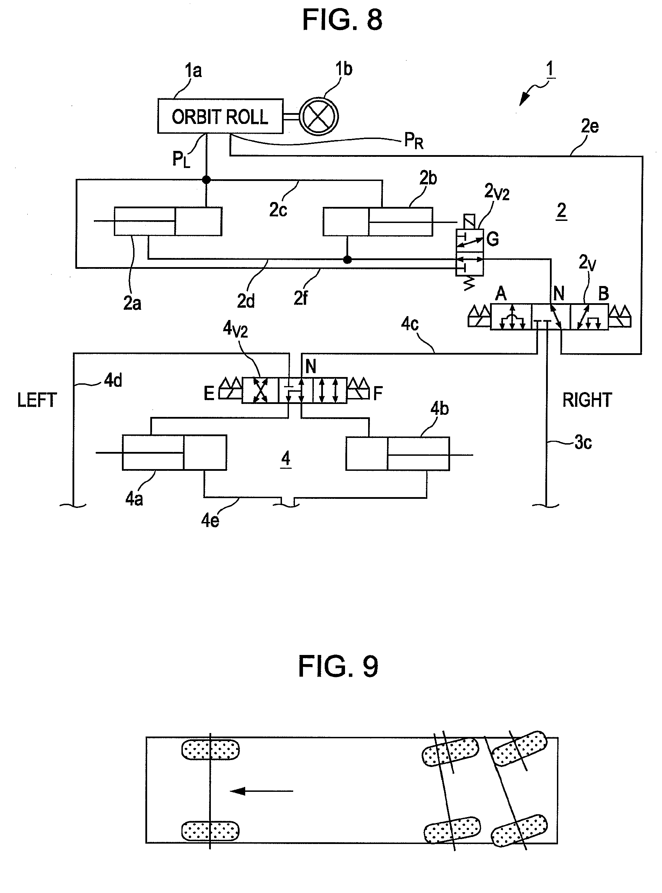

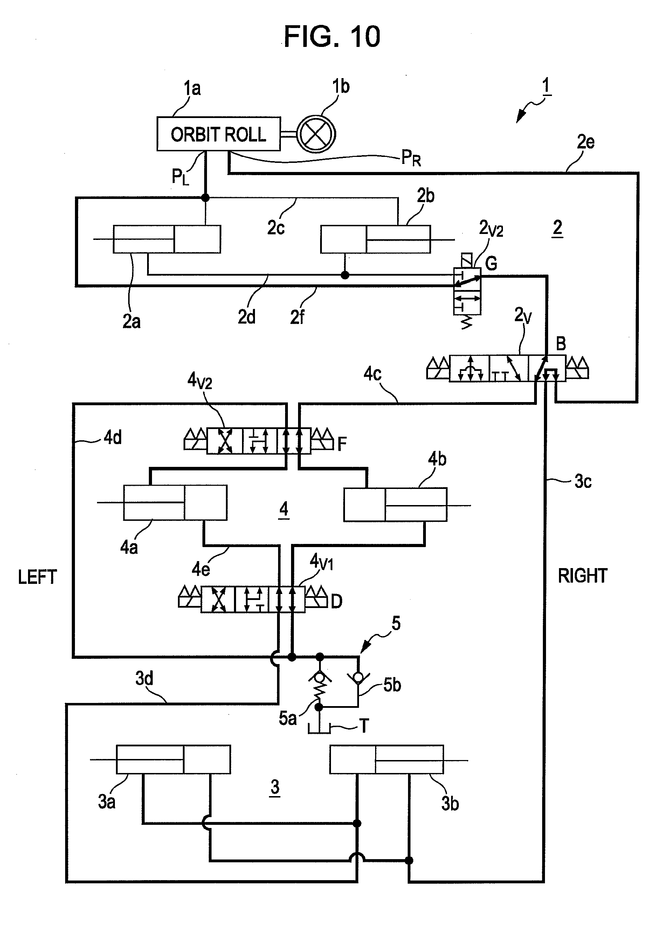

Next, a multi-axle (three-axle) vehicle according to a second embodiment of the present invention will be described with reference to the attached drawings. Fig. 8 is a diagram illustrating part of the steering control means of the multi-axle vehicle. Fig. 9 illustrates a special steering mode for steering wheels on the backside steering axles only. Fig. 10 is a diagram of the steering control means for illustrating the special steering mode of the multi-axle vehicle. The second embodiment of the present invention differs from the first embodiment only in terms of the configuration of the front hydraulic circuit 2. The configurations of the central hydraulic circuit 4 and the rear hydraulic circuit 3 of the second embodiment are identical to those of the first embodiment. Therefore, the same or like components having the same functions as those of the first embodiment are given the same reference numerals and only differences from the first embodiment will be described.

The front hydraulic circuit 2 of the steering control means 1 of the multi-axle vehicle according to the second embodiment is configured as illustrated in Fig. 8. A three-port two-position second front switching valve 2_{V2} is disposed between the front switching valve 2_{V} and the left and right front cylinders 2a and 2b on the second front line 2d of the front hydraulic circuit 2. A branch line 2f is branched from the first front line 2c extending from the L port P_{L} of the pressure-oil switching means (orbit roll) 1a and communicating with the left and right front cylinders 2a and 2b. An end of the branch line 2f is connected to the front switching valve 2_{V}. Switching of the second front switching valve 2_{V2} interrupts communication between the second front line 2d and the front switching valve 2_{V} and, at the same time, allows the branch line 2f to communicate with the central hydraulic circuit 4 and the rear hydraulic circuit. Thus, wheels on the central and rear steering axles are steered without steering wheels on the front steering axle.

Modes of operation of the multi-axle vehicle according to the second embodiment will be described with reference to Fig. 9 and Fig. 10. When the second front switching valve 2_{V2} is not positioned at a position G, the second front line 2d and the third front line 2e communicate with the central hydraulic circuit 4 and the rear hydraulic circuit 3 via the front switching valve 2_{V}. Thus, the same steering operation as that of the first embodiment can be performed.

When the second front switching valve 2_{V2} is switched to the position G, the branch line 2f communicates with the central hydraulic circuit 4 and the rear hydraulic circuit 3 while the left and right front cylinders 2a and 2b are locked. This allows steering of wheels on the central and rear steering axles as illustrated in Fig. 9.

In this case, the second front switching valve 2_{V2}, the front switching valve 2_{V}, the first central switching valve 4_{V1}, and the second central switching valve 4_{V2} are set to the position G, the position B, the position D, and the position F, respectively. Then, working fluid flowing through the lines indicated by thick lines in Fig. 10 controls the left and right rear cylinders 3a and 3b and the left and right central cylinders 4a and 4b. The following will describe a case where working fluid is discharged from the L port P_{L} of the pressure-oil switching means 1a and returned to the R port P_{R} of the pressure-oil switching means 1a.

Working fluid discharged from the L port P_{L} of the pressure-oil switching means 1a passes through the branch line 2f, the front switching valve 2_{V}, the first central line 4c, and the second central switching valve 4_{V2}, and flows into the head-side oil chamber of the right central cylinder 4b. This causes the rod of the right central cylinder 4b to extend. The working fluid forced out of the rod-side oil chamber of the right central cylinder 4b passes through the first central switching valve 4_{V1}, the second central line 4d, and the second central switching valve 4_{V2}, and flows into the rod-side oil chamber of the left central cylinder 4a actuated, by the operation of the trapezoidal link, in the direction of retraction of the rod thereof in response to the actuation of the right central cylinder 4b in the direction of extension of the rod of the right central cylinder 4b. In this case, there is no excess or deficiency in the amount of working fluid. Therefore, working fluid is not returned through the oil return/supply line 5 to the tank T or supplied from the tank T.

Then, working fluid forced out of the head-side oil chamber of the left central cylinder 4a passes through the first central switching valve 4_{V1} and the second rear line 3d of the rear hydraulic circuit 3, and flows into the rod-side oil chamber of the left rear cylinder 3a and the head-side oil chamber of the right rear cylinder 3b. This causes the rod of the left rear cylinder 3a to retract and the rod of the right rear cylinder 3b to extend. Then, working fluid forced out of the head-side oil chamber of the left rear cylinder 3a and the rod-side oil chamber of the right rear cylinder 3b passes through the first rear line 3c, the front switching valve 2_{V} of the front hydraulic circuit 2, and the third front line 2e and returns to the R port P_{R} of the pressure-oil switching means 1a. Thus, wheels on the central and rear steering axles are steered, for example, to the left.

Conversely, the following will describe a case where working fluid is discharged from the R port P_{R} of the pressure-oil switching means 1a and returned to the L port P_{L} of the pressure-oil switching means 1a. Working fluid discharged from the R port P_{R} of the pressure-oil switching means 1a passes through the third front line 2e, the front switching valve 2_{V}, and the first rear line 3c and flows into the head-side oil chamber of the left rear cylinder 3a and the rod-side oil chamber of the right rear cylinder 3b. This causes the rod of the left rear cylinder 3a to extend and the rod of the right rear cylinder 3b to retract.

The working fluid forced out of the rod-side oil chamber of the left rear cylinder 3a and the head-side oil chamber of the right rear cylinder 3b passes through the second rear line 3d and the first central switching valve 4_{V1} of the central hydraulic circuit 4, and flows into the head-side oil chamber of the left central cylinder 4a. This causes the rod of the left central cylinder 4a to extend. Then, working fluid forced out of the rod-side oil chamber of the left central cylinder 4a passes through the second central switching valve 4_{V2}, the second central line 4d, and the first central switching valve 4_{V1}, and flows into the rod-side oil chamber of the right central cylinder 4b actuated, by the operation of the trapezoidal link, in the direction of retraction of the rod thereof.

Again, there is no excess or deficiency in the amount of working fluid. Therefore, working fluid is not returned through the oil return/supply line 5 to the tank T or supplied from the tank T. Then, working fluid forced out of the head-side oil chamber of the right central cylinder 4b passes through the second central switching valve 4_{V2}, the first central line 4c, the front switching valve 2_{V}, the second front switching valve 2_{V2}, and the branch line 2f and returns to the L port P_{L} of the pressure-oil switching means 1a. Thus, wheels on the central and rear steering axles are steered, for example, to the right.

The multi-axle vehicle of the second embodiment has the following effects in addition to those of the first embodiment described above. In the multi-axle vehicle of the second embodiment, the three-port two-position second front switching valve 2_{V2} is switched to cause the front hydraulic circuit 2 to be closed. This can lock the steering of wheels on the front steering axle and, at the same time, allow the steering of wheels on the central and rear steering axles only. Therefore, in the multi-axle vehicle of the second embodiment, rear steering wheels can be independently controlled by steering the wheels on the central and rear steering axles only. Thus, an excellent effect of enhancing the capability of accessing small spaces can be achieved.

A three-axle vehicle has been described as an example of the multi-axle vehicle according to the first and second embodiments. However, if the multi-axle vehicle has two front steering axles, including a first steering axle at the forefront and a second steering axle behind the first steering axle (i.e., the multi-axle vehicle has four axles in total, including central and rear steering axles as well as the two front steering axles), steering axle control applied to the central and rear steering axles in the case of the three-axle vehicle may be applied to the two front steering axles of this four-axle vehicle. In other words, the technical concept of the present invention is applicable not only to three-axle vehicles, but also to four-axle vehicles.

If the R port P_{R} of the pressure-oil switching means 1a communicates with the left and right front cylinders 2a and 2b, further with the front switching valve 2_{V}, and then communicates with the L port P_{L} of the pressure-oil switching means 1a, a possible configuration of the steering control means 1 is as follows. That is, the first rear line 3c communicates with the rod-side oil chamber of the left rear cylinder 3a and the head-side oil chamber of the right rear cylinder 3b. Then, the head-side oil chamber of the left rear cylinder 3a and the rod-side oil chamber of the right rear cylinder 3b communicate with the first central switching valve 4_{V1}. Thus, lines communicate with the rod-side and head-side oil chambers of the left and right cylinders in a manner opposite to that in the steering control means 1 according to the embodiments described above. Therefore, the configuration of the steering control means 1 is not limited to that of the embodiments described above.

Although the invention has been described with reference to the preferred embodiments illustrated in the attached drawings, it is noted that equivalents may be employed and substitutions made herein without departing from the scope of the invention as recited in the claims.

A multi-axle vehicle includes a steering controller (1) which controls left and right cylinders (2a and 2b, 4a and 4b, and 3a and 3b) for steering wheels on front, central, and rear steering axles. The steering controller (1) includes a front hydraulic circuit (2), a rear hydraulic circuit (3), and a central hydraulic circuit (4) to which the front hydraulic circuit (2) and the rear hydraulic circuit (3) are serially connected by switching a front switching valve (2_{V}). The central hydraulic circuit (4) includes three-position first and second central switching valves (4_{V1} and 4_{V2}) for switching the multi-axle vehicle to a first mode where the hydraulic pressure of working fluid is applied to both the head-side and rod-side oil chambers of the left and right central cylinders (4a and 4b), a second mode where the hydraulic pressure of working fluid is applied only to the head-side oil chambers of the left and right central cylinders (4a and 4b), and a third mode where the hydraulic pressure of working fluid is applied only to the rod-side oil chambers of the left and right central cylinders (4a and 4b). The central hydraulic circuit (4) further includes an oil return/supply line (5) for compensating for an excess or deficiency of working fluid which bidirectionally flows between the left and right central cylinders (4a and 4b).

## Claims

1. A multi-axle vehicle comprising:
a front steering axle;
a central steering axle disposed at the rear of the front steering axle;
a rear steering axle disposed at the rear of the central steering axle;
a trapezoidal link (21) for steering wheels on each of the steering axles in synchronization with each other;
left and right front hydraulic cylinders (2a and 2b) for steering wheels on the front steering axle;
left and right central hydraulic cylinders (4a and 4b) for steering wheels on the central steering axle;
left and right rear hydraulic cylinder (3a and 3b) for steering wheels on the rear steering axle;
pressure-oil switching means (1a); and
steering control means (1) for supplying working fluid from the pressure-oil switching means (1a) to the left and right hydraulic cylinders (2a and 2b, 4a and 4b, and 3a and 3b),
wherein the multi-axle vehicle is **characterized in that** the steering control means (1) comprises:
a tank (T);
a front hydraulic circuit (2) including a front switching valve (2_{V}) having three positions (N, A, and B), a first front line (2c) extending from one port (P_{L}) of the pressure-oil switching means (1a) and communicating with the left and right front hydraulic cylinders (2a and 2b), a second front line (2d) extending from the left and right front hydraulic cylinders (2a and 2b) and communicating with the front switching valve (2_{V}), and a third front line (2e) extending from the front switching valve (2_{V}) and communicating with the other port (P_{R}) of the pressure-oil switching means (1a);
a rear hydraulic circuit (3) including a first rear line (3c) and a second rear line (3d) extending from the left and right rear hydraulic cylinders (3a and 3b); and
a central hydraulic circuit (4) including a first central line (4c) extending from the front switching valve (2_{V}); a first central switching valve (4_{V1}) having three selectable positions comprising a first position (N) for allowing the second rear line (3d) to communicate with both the left and right central hydraulic cylinders (4a and 4b), a second position (C) for allowing the second rear line (3d) to communicate with the right central hydraulic cylinder (4b), and a third position (D) for allowing the second rear line (3d) to communicate with the left central hydraulic cylinder (4a); a second central switching valve (4_{V2}) having three selectable positions comprising a first position (N) for allowing the first central line (4c) to communicate with both the left and right central hydraulic cylinders (4a and 4b), a second position (E) for allowing the first central line (4c) to communicate with the left central hydraulic cylinder (4a), and a third position (F) for allowing the first central line (4c) to communicate with the right central hydraulic cylinder (4b); a second central line (4d) for allowing one of the left and right central hydraulic cylinders (4a and 4b) to communicate, via the first central switching valve (4_{V1}) and the second central switching valve (4_{V2}), with the other of the left and right central hydraulic cylinders (4a and 4b); and an oil return/supply line (5) extending separately from the second central line (4d), communicating with the tank (T), and provided for compensating for an excess or deficiency of working fluid,
wherein the central hydraulic circuit (4) and the rear hydraulic circuit (3) serially communicate with the front hydraulic circuit (2) via the front switching valve (2ᵥ).

2. The multi-axle vehicle according to Claim 1, wherein the front hydraulic circuit (2) further comprises:
a branch line (2f) branched from the first front line (2c); and
a three-port two-position second front switching valve (2_{V2}) having three ports and two positions, disposed between the front switching valve (2_{V}) and the left and right front hydraulic cylinders (2a and 2b) on the second front line (2d), and configured to make a selection to allow the branch line (2f) to communicate with the front switching valve (2_{V}) and interrupt communication between the second front line (2d) and the front switching valve (2_{V}), or cancel the selection to interrupt the communication between the branch line (2f) and the front switching valve (2_{V}) and allow the second front line (2d) to communicate with the front switching valve (2_{V}).
